# EUROPEAN PATENT APPLICATION

(11) **EP 3 187 296 A1**
(43) Date of publication of application: **05.07.2017**
(21) Application number: 15837013.0
(22) Date of filing: 20.08.2015
(51) Int. Cl.: B23K 20/10, B06B 1/06, H02N 2/00

(54) **ULTRASONIC WELDING DEVICE**

(30) Priority: 25.08.2014 JP 2014170276
(71) Applicant: NISSAN MOTOR CO., LTD., Yokohama-shi, Kanagawa 221-0023 (JP)
(72) Inventor: NAKAMOTO, Masahiro, Atsugi-shi Kanagawa 243-0123 (JP); TSUJINO, Jiromaru, Yokohama-shi Kanagawa 222-0033 (JP); SUGIMOTO, Eiichi, Tokyo 110-0003 (JP)
(74) Representative: Grünecker Patent- und Rechtsanwälte PartG mbB
(86) International application number: PCT/JP2015/073321
(87) International publication number: WO 2016/031660

(57) **Abstract**

An ultrasonic welding device (1) for ultrasonic welding of members to be welded (W1, W2), comprising: an ultrasonic horn (3) configured to generate ultrasonic vibration; a horn chip (4) configured to transmit the ultrasonic vibration to the members to be welded (W1, W2); and a connecting member (7) provided between the ultrasonic horn (3) and the horn chip (4) for connecting them. The ultrasonic horn (3) has a first screw part (33) at the tip. The horn chip (4) has a second screw part (43) at the base end. The connecting member has a third screw part (71) at one side to be screwed with the first screw part (33) and a fourth screw part (72) at the other side to be screwed with the second screw part (43). The ultrasonic horn (3) and the horn chip (4) are connected by the connecting member (7) so that the attachment surface (35) of the ultrasonic horn (3) and the attachment surface (42) of the horn chip (4) are pressed to each other.

## Description

### [Technical Field]

The present invention relates to an ultrasonic welding device for ultrasonic welding of members to be welded.

### [Background Art]

An ultrasonic welding device is known which has a vibrator for generation of ultrasonic vibration and which is configured such that the outer surface of an ultrasonic horn connected to the vibrator is provided with a circular depression formed with a female screw at the inner surface of the depression and a connecting member is fitted into the female screw of the depression in a state in which the chip base of a horn chip is interposed therebetween. This configuration allows the horn chip to be fixed to the ultrasonic horn in an attachable and detachable manner (Patent Document 1: JP10-52768A),

### [Prior Art Document]

### [Patent Document]

[Patent Document 1] JP 10-52768A (H10-52768: 1998)

### [Summary of Invention]

### [Problems to be solved by Invention]

In the above prior art, however, stress due to ultrasonic vibration concentrates at the border between the base end of the horn chip and the chip base. Such stress causes cracks in the expensive horn chip and the horn chip may have to be frequently replaced, which may be problematic.

A problem to be solved by the present invention is to provide an ultrasonic welding device in which the ultrasonic horn and the horn chip can be detachably attached to each other and the durability of the horn chip is high.

### [Means for solving problems]

The present invention solves the above problem as follows. A connecting member is provided between an ultrasonic horn and a horn chip to connect the ultrasonic horn and the horn chip. The ultrasonic horn has a first screw part and the horn chip has a second screw part. The connecting member has a third screw part at one side and a fourth screw part at the other side. The third screw part is to be screwed with the first screw part and the fourth screw part is to be screwed with the second screw part. The ultrasonic horn and the horn chip are connected by the connecting member so that the attachment surface of the ultrasonic horn and the attachment surface of the horn chip are pressed to each other.

### [Effect of Invention]

According to the present invention, the ultrasonic horn and the horn chip are connected by the connecting member using the first to fourth screw parts and the stress due to ultrasonic vibration is therefore received by the entire surfaces for screwing of the first to fourth screw parts. Thus, the stress concentration can be distributed to enhance the durability of the horn chip.

### [Brief Description of Drawings]

FIG. 1 is an overall front elevational view illustrating one or more embodiments of the ultrasonic welding device according to the present invention.
FIG. 2A is an exploded cross-sectional view illustrating an attaching structure of the ultrasonic horn and horn chip according to a first embodiment of the present invention and is a cross-sectional view corresponding to part II of FIG. 1.
FIG. 2B is an assembled cross-sectional view for FIG. 2A.
FIG. 2C is a view in the direction of arrow IIC of FIG. 2A (bottom plan view).
FIG. 3A is an exploded cross-sectional view illustrating an attaching structure of the ultrasonic horn and horn chip according to a second embodiment of the present invention and is a cross-sectional view corresponding to part II of FIG. 1.
FIG. 3B is an assembled cross-sectional view for FIG. 3A.
FIG. 3C is an enlarged cross-sectional view of part IIIC of FIG. 3B.
FIG. 4A is an exploded cross-sectional view illustrating an attaching structure of the ultrasonic horn and horn chip according to a third embodiment of the present invention and is a cross-sectional view corresponding to part II of FIG. 1.
FIG. 4B is an assembled cross-sectional view for FIG. 4A.
FIG. 5A is an exploded cross-sectional view illustrating an attaching structure of the ultrasonic horn and horn chip according to a fourth embodiment of the present invention and is a cross-sectional view corresponding to part II of FIG. 1.
FIG. 5B is an assembled cross-sectional view for FIG. 5A.

### [Mode(s) for Carrying out the Invention]

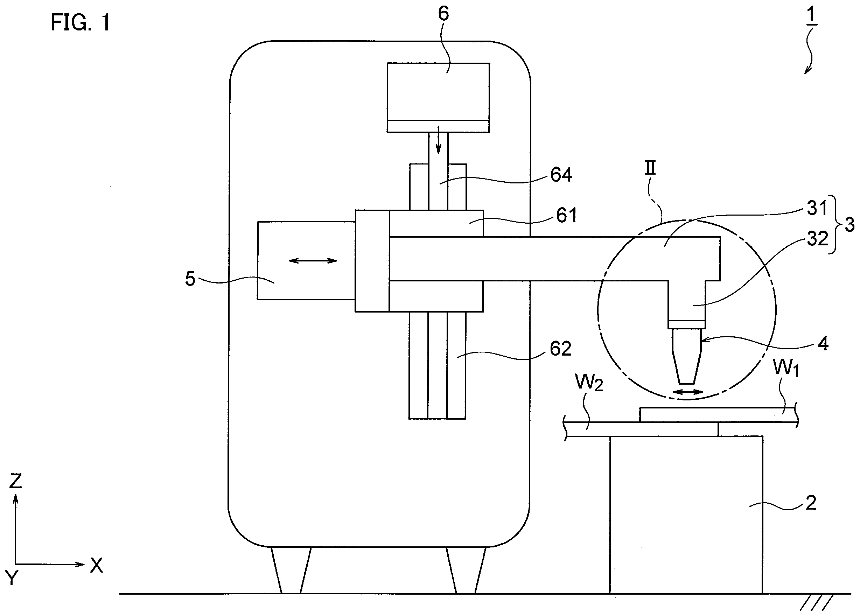

Hereinafter, some embodiments in which the ultrasonic welding device according to the present invention is embodied will be described with reference to the drawings. FIG. 1 is an overall front elevational view illustrating one or more embodiments of the ultrasonic welding device according to the present invention. First, common features of ultrasonic welding devices 1 according to first to fourth embodiments will be described with reference to FIG. 1. These specific embodiments will be described later. The ultrasonic welding device 1 illustrated in FIG. 1 is a device that applies ultrasonic vibration to first and second members to be welded W1 and W2 in a state in which the first member W1 at least partially overlaps the second member W2, thereby to form an ultrasonic bonded body configured such that the first and second members W1 and W2 are bonded to each other at the bonding site. One or more embodiments of the present invention will be described with reference to an exemplary case in which two members to be welded W1 and W2 composed of a metal material, such as aluminum and copper, are welded by ultrasonic.

The ultrasonic welding device 1 according to one or more embodiments of the present invention may be used, for example, when bonding output terminals of a flat secondary battery to each other, when bonding such an output terminal and a current collector, or when bonding other similar components, but the usage of the members to be welded W1 and W2 is not particularly limited. In one or more embodiments below, the present invention will be described with reference to an exemplary case in which two members to be welded W1 and W2 are bonded, but the present invention may also be used when three or more members to be welded are bonded, as necessary. In one or more embodiments of the present invention, description will be made to an example in which members to be welded W1 and W2 of the same material are bonded to each other, but the present invention is not limited to this, and members to be welded W1 and W2 of different materials may also be bonded to each other.

As illustrated in FIG. 1, the ultrasonic welding device 1 according to one or more embodiments of the present invention comprises an anvil 2 on which the members to be welded W1 and W2 are placed, an ultrasonic horn 3, a horn chip 4 attached to the ultrasonic horn 3, a vibrator 5, and a pressure device 6. The anvil 2 is a metal block on which the first and second members to be welded W1 and W2 are placed and receives ultrasonic vibration and pressing force that are transmitted from the horn chip 4 in a state in which the two members to be welded W1 and W2 are interposed between the horn chip 4 and the anvil 2.

The ultrasonic horn 3 has an arm part 31 that extends toward +X-direction in FIG. 1 and a chip mounting part 32. The arm part 31 is a cylindrical member that has an approximately constant diameter along its extending direction, and the base end (left-side end in FIG. 1) of the arm part 31 is connected to the vibrator 5. This allows the ultrasonic vibration (reciprocating simple harmonic motion) generated in ±X-direction by the vibrator 5 to transmit to the horn chip 4. The chip mounting part 32 is provided below the vicinity of the tip (right-side end in FIG. 1) of the arm part 31 and the horn chip 4 is attached to the chip mounting part 32. The ultrasonic horn 3 is formed of a material having appropriate hardness to allow transmission of ultrasonic vibration generated from the vibrator 5. Examples of such materials include superhard alloys such as those comprising tungsten. The cross-sectional shape of the chip mounting part 32 according to one or more embodiments of the present invention may be a circular shape or may also be a rectangular shape.

The vibrator 5 according to one or more embodiments of the present invention is a vibrator composed, for example, of a piezoelectric element and is connected to the base end of the ultrasonic horn 3. The vibrator 5 generates ultrasonic vibration with a certain amplitude along XY-plane in FIG. 1 at a predetermined frequency and transmits the generated ultrasonic vibration to the members to be welded W1 and W2 via the ultrasonic horn 3 and the horn chip 4.

The pressure device 6 is a device that applies pressing force to the two members to be welded W1 and W2 placed on the anvil 2 when these members W1 and W2 are bonded, and is composed, for example, of an air cylinder, oil hydraulic cylinder, or the like. The base end side of the ultrasonic horn 3 is fixed to a support member 61 and further attached to a rail 62 via the support member 61 in a state in which the base end side of the ultrasonic horn 3 can move up and down along the rail 62. The pressure device 6 and the support member 61 are connected by a shaft 64, which allows the pressing force applied by the pressure device 6 to transmit to the ultrasonic horn 3 via the shaft 64 and the support member 61.

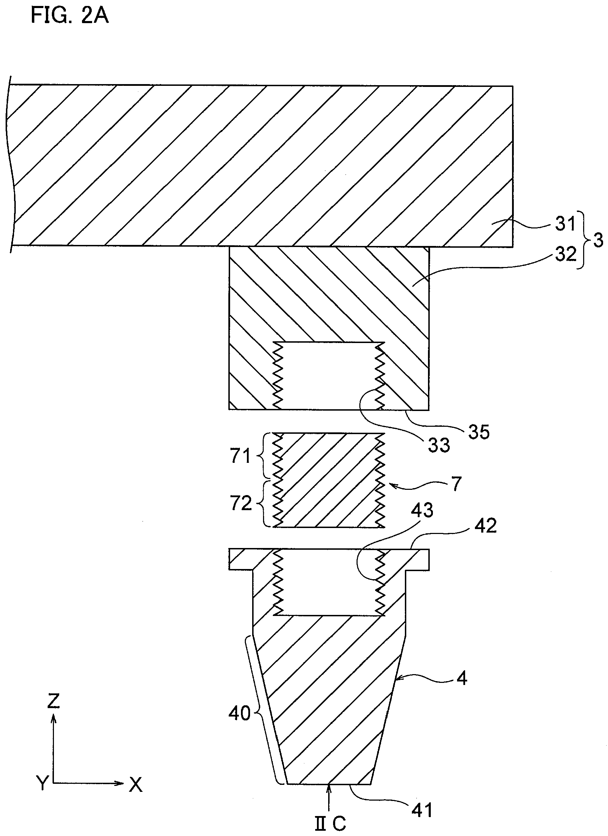

The horn chip 4 is attached to the chip mounting part 32 of the ultrasonic horn 3 and transmits the ultrasonic vibration, which is transmitted from the vibrator 5 via the ultrasonic horn 3, to the members to be welded W1 and W2. The horn chip 4 is composed of a superhard alloy, such as those comprising tungsten, and has a taper part 40 of which the diameter decreases toward the side of the members to be welded W1 and W2 (see FIG. 2A). Therefore, the outer diameter of the tip surface 41 (surface facing the member to be welded W1) of the horn chip 4 is the minimum outer diameter of the horn chip 4.

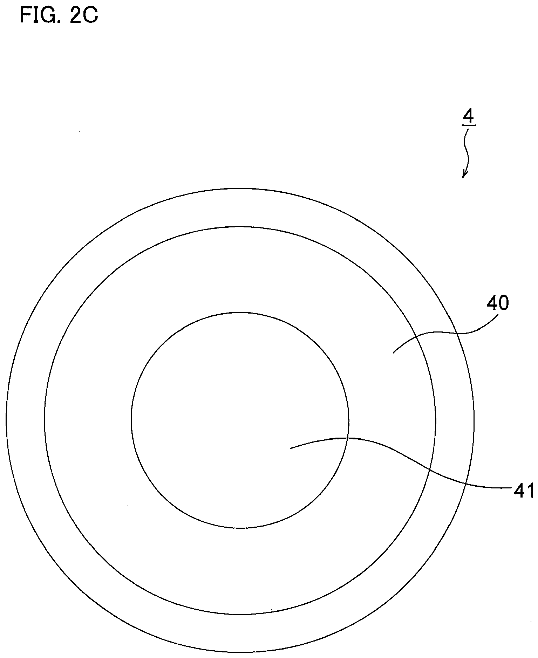

The tip surface 41 of the horn chip 4 may be subjected to some surface treatment, such as nitriding treatment and diamond coating treatment, as necessary. The tip surface 41 of the horn chip 4 according to one or more embodiments of the present invention is in a circular shape, as illustrated in FIG. 2C, and the stress due to ultrasonic vibration can thereby be suppressed from locally concentrating on the members to be welded W1 and W2 when the ultrasonic vibration transmits through the members W1 and W2. This can prevent the damage of the members to be welded W1 and W2. Moreover, when the horn chip 4 is attached to the chip mounting part 32 of the ultrasonic horn 3, the anisotropy in the direction of screwing is eliminated. That is, the tip surface 41 of the horn chip 4 being formed in a circular shape can enhance the workability in the attaching operation because the contact face with the members to be welded W1 and W2 is always in a circular shape anywhere the horn chip 4 is stopped when it is screwed.

It may suffice that the tip surface 41 of the horn chip 4 according to one or more embodiments of the present invention is in a circular shape, and the cross-sectional shape other than the tip surface may be a circular shape or may also be a rectangular shape. The taper part 40 of the horn chip 4 according to one or more embodiments of the present invention is in a shape of which the outer diameter linearly decreases toward the tip surface 41, but is not particularly limited to this. For example, the taper part 40 may be in a shape of which the outer diameter decreases in a curved fashion toward the tip surface 41. In an alternative embodiment, the horn chip 4 may be in a shape in which the tip surface 41 has a circular shape and the taper part 40 has a rectangular column shape, or may also be in a cylindrical shape or the like in which the horn chip 4 as a whole has an approximately constant diameter.

The above are common features of the first to fourth embodiments which will be described below. The following description is made to embodiments regarding the attaching structure of the ultrasonic horn 3 and horn chip 4 of the ultrasonic welding device 1 according to one or more embodiments of the present invention.

### «First Embodiment»

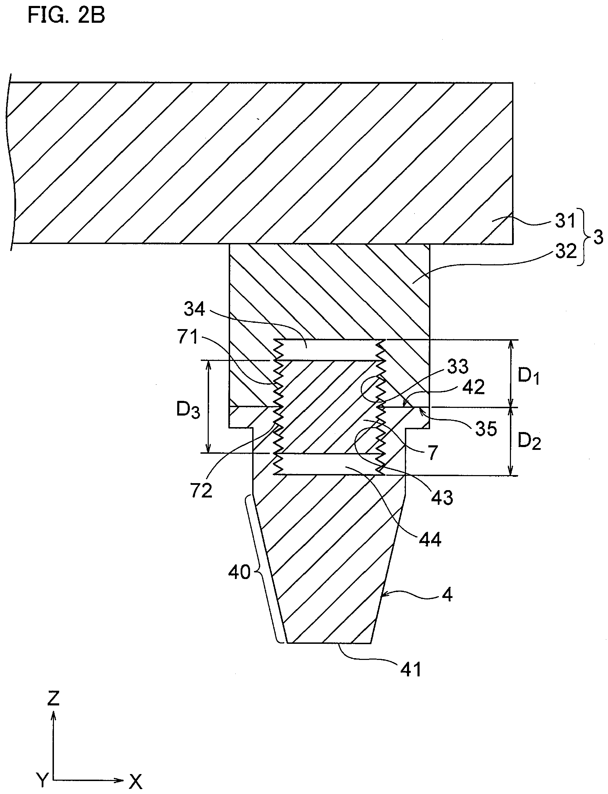

FIG. 2A is an exploded cross-sectional view illustrating an attaching structure of the ultrasonic horn 3 and horn chip 4 according to the first embodiment of the present invention and is a cross-sectional view corresponding to part II of FIG. 1, FIG. 2B is an assembled cross-sectional view for FIG. 2A, and FIG. 2C is a view in the direction of arrow IIC of FIG. 2A (bottom plan view). The attaching structure of the ultrasonic horn 3 and horn chip 4 according to the present embodiment is configured to include a connecting member 7.

In the present embodiment, as illustrated in FIG. 2A, the chip mounting part 32 as the tip of the ultrasonic horn 3 is formed with an attachment surface 35, which is formed with a first screw part 33 having a predetermined diameter. The base end of the horn chip 4 is formed with an attachment surface 42, which is formed with a second screw part 43 having a predetermined diameter. Both the first screw part 33 and the second screw part 43 in the present embodiment are provided as female screws.

As illustrated in FIG. 2A, the connecting member 7 is composed of a solid cylindrical member of which the upper half is formed with a third screw part 71 and the lower half is formed with a fourth screw part 72. Both the third screw part 71 and the fourth screw part 72 in the present embodiment are provided as male screws. The third screw part 71 is screwed with the first screw part 33 formed in the chip mounting part 32 of the ultrasonic horn 3 and the fourth screw part 72 is screwed with the second screw part 43 formed in the horn chip 4. That is, the horn chip 4 is attached to the chip mounting part 32 of the ultrasonic horn 3 via the connecting member 7 by screwing the first screw part 33 and the third screw part 71 with each other and screwing the second screw part 43 and the fourth screw part 72 with each other.

In the present embodiment, the third screw part 71 and fourth screw part 72 of the connecting member 7 have approximately the same length, diameter and pitch, but the present invention is not limited to this. For example, the third screw part 71 and the fourth screw part 72 may have different lengths, different diameters and/or different pitches, provided that the first screw part 33 and the third screw part 71 are in a relationship in which they can be appropriately screwed with each other and the second screw part 43 and the fourth screw part 72 are in a relationship in which they can be appropriately screwed with each other. The connecting member 7 illustrated in FIG. 2A and FIG. 2B is composed of a solid material, but the present invention is not limited to this and a hollow material may also be employed.

In the present embodiment, the attachment surface 35 of the ultrasonic horn 3 is provided as a flat surface (XY-plane in FIG. 2B) that is substantially perpendicular to the screwing direction (Z-axis direction in FIG. 2B) of the first screw part 33. The attachment surface 42 of the horn chip 4 is also provided as a flat surface (XY-plane in FIG. 2B) that is substantially perpendicular to the screwing direction (Z-axis direction in FIG. 2B) of the second screw part 43. Therefore, when the horn chip 4 and the chip mounting part 32 are connected to each other via the connecting member 7, the attachment surface 35 around the first screw part 33 and the attachment surface 42 around the second screw part 43 are brought into close contact with each other.

When D1 represents the length in the axis direction of the first screw part 33 formed in the chip mounting part 32 of the ultrasonic horn 3 and D2 represents the length in the axis direction of the second screw part 43 formed in the horn chip 4, the sum (D1+D2) is set, as illustrated in FIG. 2B, larger than the length D3 of the connecting member 7 in the axis direction ((D1+D2)>D3), Therefore, when the horn chip 4 and the chip mounting part 32 are connected to each other via the connecting member 7, as illustrated in FIG. 2B, a space 44 is formed below the second screw part 43 of the horn chip 4 while a space 34 is formed above the first screw part 33 of the chip mounting part 32.

As the above, in the ultrasonic welding device 1 of the present embodiment, first, the connecting member 7 is used to connect the horn chip 4 to the ultrasonic horn 3 in an attachable and detachable manner. Therefore, even when the horn chip 4 deteriorates due to a long period of use, it suffices to replace only the horn chip 4 without replacing the ultrasonic horn 3.

Next, in the ultrasonic welding device 1 of the present embodiment, the attachment surface 42 of the horn chip 4 is formed with the second screw part 43 as a female screw and the attachment surface 35 of the ultrasonic horn 3 is formed with the first screw part 33 also as a female screw. In addition, one side of the connecting member 7 is formed with the third screw part 71 as a male screw and the other side is formed with the fourth screw part 72 also as a male screw. The horn chip 4 and the chip mounting part 32 of ultrasonic horn 3 are fixed to each other by screwing the first screw part 33 and the third screw part 71 while screwing the second screw part 43 and the fourth screw part 72. According to this structure, the ultrasonic vibration transmitting from the ultrasonic horn 3 to the horn chip 4 is distributed between both the screwed portion of the first screw part 33 and third screw part 71 and the screwed portion of the second screw part 43 and fourth screw part 72. As a result, the stress due to ultrasonic vibration is suppressed from concentrating at parts of the chip mounting part 32 and horn chip 4 and the damage of the chip mounting part 32 and horn chip 4 due to such stress concentration can be prevented.

When the chip mounting part 32 of ultrasonic horn 3 and the horn chip 4 are connected to each other via the connecting member 7, the attachment surface 35 of the ultrasonic horn 3 and the attachment surface 42 of the horn chip 4 are pressed against each other. Therefore, deterioration of the transmission efficiency of ultrasonic vibration can be suppressed. Moreover, it is not necessary to increase the size of the chip mounting part 32 and/or the horn chip 4 for their enhanced strength. Also from such a viewpoint, the transmission efficiency of ultrasonic vibration to the members to be welded W1 and W2 can be improved.

In the present embodiment, the sum (D1+D2) of the length D1 of the first screw part 33 formed in the chip mounting part 32 of the ultrasonic horn 3 and the length D2 of the second screw part 43 formed in the horn chip 4 is set larger than the length D3 of the connecting member 7 ((D1+D2)>D3). Accordingly, when the horn chip 4 is screwed, the attachment surface 42 of the horn chip 4 and the attachment surface 35 of the chip mounting part 32 of the ultrasonic horn 3 are consequently brought into contact and pressed against each other. Therefore, the ultrasonic vibration transmitting from the ultrasonic horn 3 to the horn chip 4 can be further distributed at the contacted portions.

The attachment surface 42 of the horn chip 4 in the present embodiment is a flat surface that is substantially perpendicular to the screwing direction of the second screw part 43 while the attachment surface 35 of the chip mounting part 32 of the ultrasonic horn 3 is also a flat surface that is substantially perpendicular to the screwing direction of the first screw part 33. Therefore, when the horn chip 4 and the chip mounting part 32 are fastened and fixed to each other by the connecting member 7, the attachment surface 35 and the attachment surface 42 are in close contact with each other around the first and second screw parts 33 and 43 to have a certain contact area in accordance with the flatness. This can ensure that the ultrasonic vibration transmitting from the ultrasonic horn 3 to the horn chip 4 is distributed at the closely-contacted portions, thereby to further enhance the above effects.

The tip surface 41 of the horn chip 4 in the present embodiment is in a circular shape. Therefore, when the horn chip 4 is attached to the chip mounting part 32 of the ultrasonic horn 3, the anisotropy in the direction of screwing is eliminated. That is, the tip surface 41 of the horn chip 4 being formed in a circular shape can enhance the workability in the attaching operation because the contact face with the members to be welded W1 and W2 is always in a circular shape anywhere the horn chip 4 is stopped when it is screwed. Moreover, the tip surface 41 of the horn chip 4 is in a circular shape and the stress due to ultrasonic vibration transmitted to the members to be welded W can thereby be suppressed from locally transmitting to the members to be welded W. This can suppress the damage of the members to be welded W.

Furthermore, the horn chip 4 in the present embodiment has the taper part 40 and the stress acting when the ultrasonic vibration transmits through the horn chip 4 can be prevented from being locally accumulated in the horn chip 4. This can improve the durability of the horn chip 4.

### «Second Embodiment»

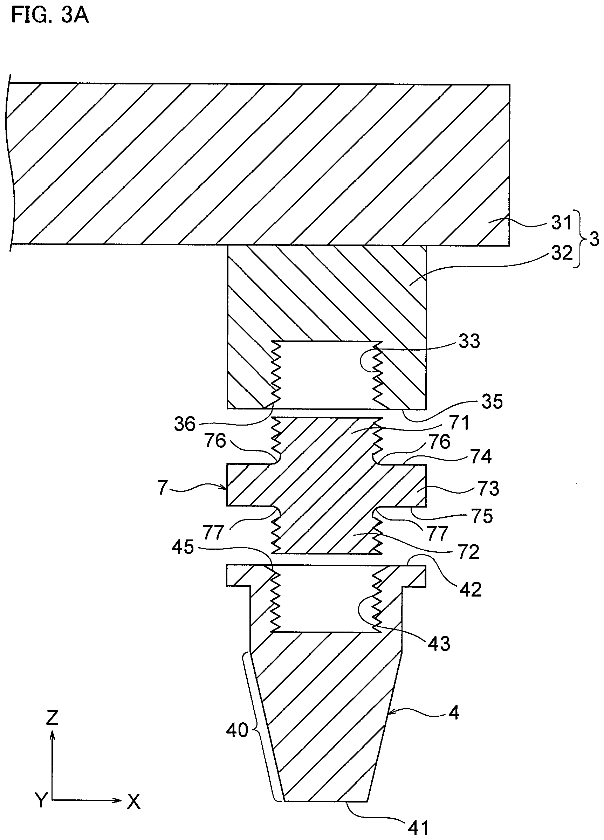

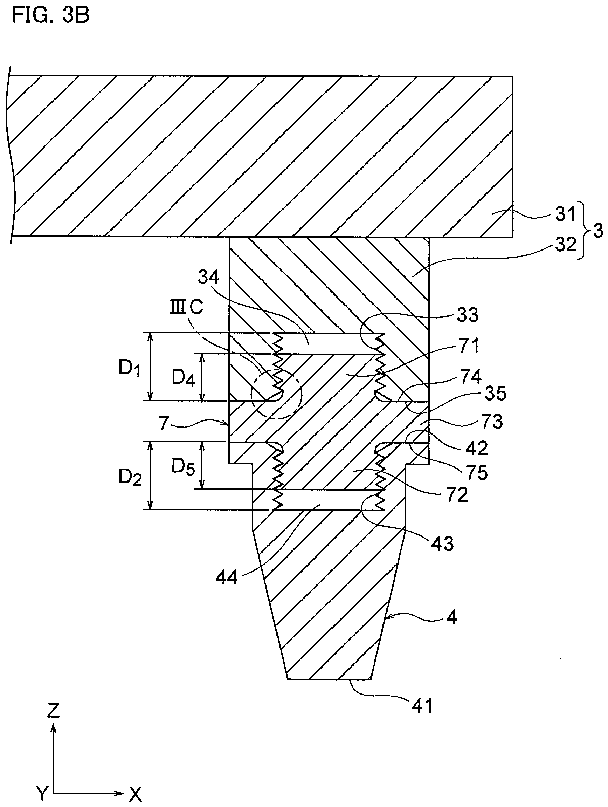

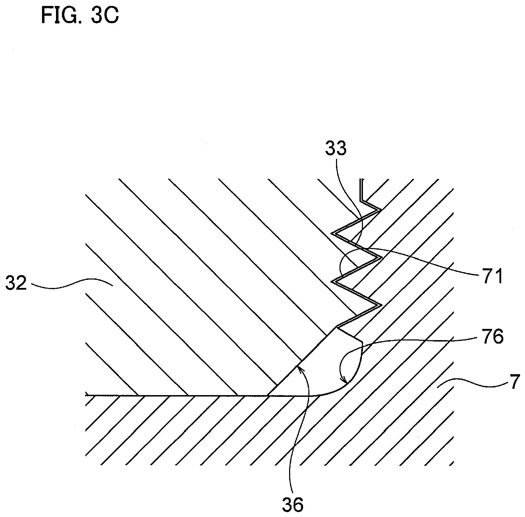

FIG. 3A is an exploded cross-sectional view illustrating an attaching structure of the ultrasonic horn and horn chip according to a second embodiment of the present invention and is a cross-sectional view corresponding to part II of FIG. 1, FIG. 3B is an assembled cross-sectional view for FIG. 3A, and FIG. 3C is an enlarged cross-sectional view of part IIIC of FIG. 3B. The attaching structure of the ultrasonic horn 3 and horn chip 4 according to the present embodiment is configured to include a connecting member 7 as in the first embodiment, but its shape is different.

That is, the connecting member 7 of the present embodiment is not a cylindrical member as the connecting member 7 of the first embodiment and is configured to include a flat plate part 73 that has a pair of surfaces 74 and 75 between a third screw part 71 formed at one side and a fourth screw part 72 formed at the other side. Both the first screw part 33 and the second screw part 43 being provided as female screws and both the third screw part 71 and the fourth screw part 72 being provided as male screws in the present embodiment are the same as in the first embodiment.

In the present embodiment, one surface 74 (referred to as a "first main surface 74," hereinafter) of the plate part 73 of the connecting member 7 is provided as a flat surface (XY-plane in FIG. 3A) that is substantially perpendicular to the axis direction (Z-axis direction in FIG. 3A) of the third screw part 71. The other surface 75 (referred to as a "second main surface 75," hereinafter) of the plate part 73 of the connecting member 7 is also provided as a flat surface (XY-plane in FIG. 3A) that is substantially perpendicular to the axis direction (Z-axis direction in FIG. 3A) of the fourth screw part 72. Therefore, when the horn chip 4 and the chip mounting part 32 are connected to each other via the connecting member 7, the first main surface 74 of the plate part 73 and the attachment surface 35 of the ultrasonic horn 3 are brought into close contact with each other while the second main surface 75 of the plate part 73 and the attachment surface 42 of the horn chip 4 are also brought into close contact with each other. This allows the attachment surface 35 of the ultrasonic horn 3 and the attachment surface 42 of the horn chip 4 to be indirectly pressed against each other via the plate part 73.

In the connecting member 7 of the present embodiment, as illustrated in FIG. 3B, the length D1 of the first screw part 33 is set longer than the length D4 of the third screw part 71 (D1>D4) thereby to form a space 34 above the third screw part 71. Similarly, the length D2 of the second screw part 43 is set longer than the length D5 of the fourth screw part 72 (D2>D5) thereby to form a space 44 below the fourth screw part 72. According to such setting, when the connecting member 7 is connected to the horn chip 4 and the chip mounting part 32 of ultrasonic horn 3, the first main surface 74 of the plate part 73 is consequently brought into close contact with the attachment surface 35 of the chip mounting part 32 and the second main surface 75 of the plate part 73 is also brought into close contact with the attachment surface 42 of the horn chip 4.

The connecting member 7 of the present embodiment is in a shape having the plate part 73 at the center in the axis direction, rather than being a cylindrical member, and may possibly cause the stress concentration at the border between the third screw part 71 and the plate part 73 and at the border between the fourth screw part 72 and the plate part 73. Therefore, as illustrated in FIG. 3A and FIG. 3B and an enlarged part thereof is representatively illustrated in FIG. 3C, the entire circumference of the border between the plate part 73 and the third screw part 71 is formed with a first curved surface 76 while the entire circumference of the border between the plate part 73 and the fourth screw part 72 is formed with a second curved surface 77. In addition, the edge part of the first screw part 33 of the attachment surface 35 of the ultrasonic horn 3 is formed with a first circular inclined surface 36 that spreads toward the tip while the edge part of the second screw part 43 of the attachment surface 42 of the horn chip 4 is formed with a second circular inclined surface 45 that spreads toward the base end. Thus, the portion at which the stress is highly possible to concentrate is formed in a curved shape or tapered shape rather than a sharp shape, and the stress concentration can thereby be suppressed.

Other features are basically the same as those of the first embodiment and the description is borrowed herein by denoting the same or similar parts using the same reference numerals also in FIGS. 3A to 3C.

### «Third Embodiment»

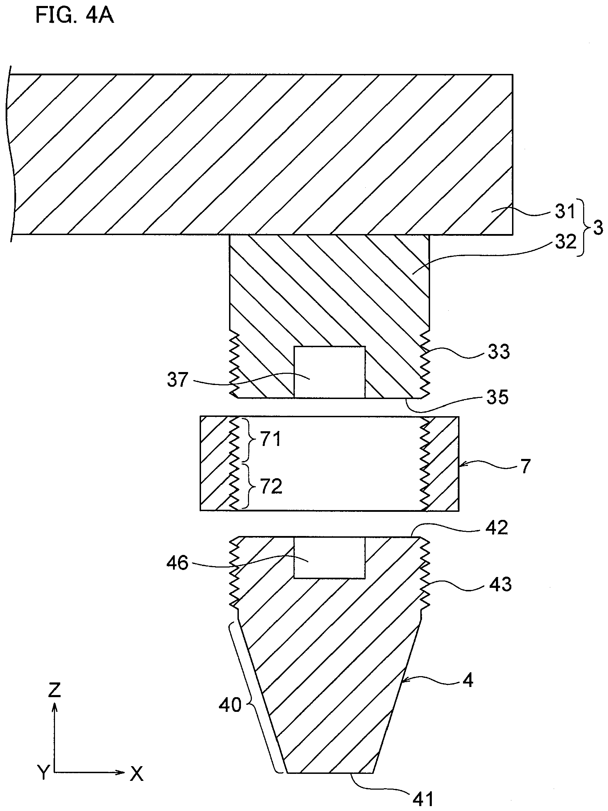

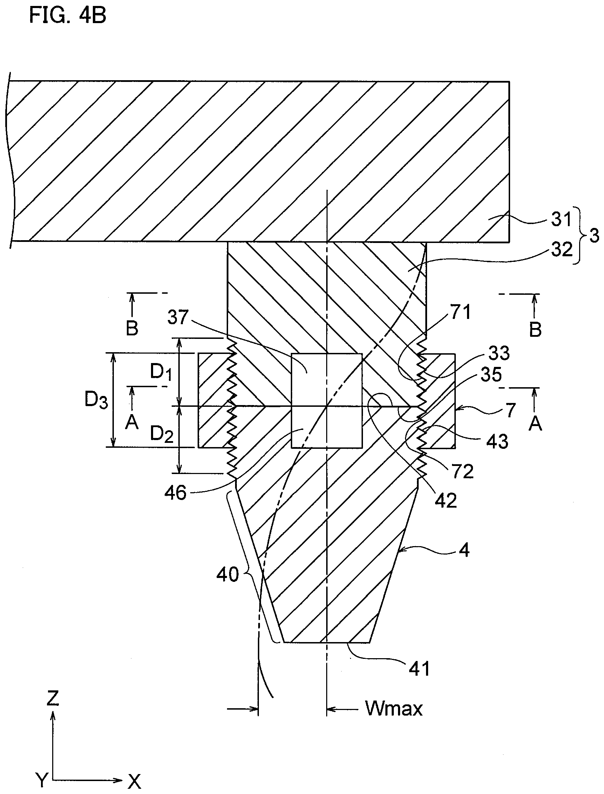

FIG. 4A is an exploded cross-sectional view illustrating an attaching structure of the ultrasonic horn and horn chip according to a third embodiment of the present invention and is a cross-sectional view corresponding to part II of FIG. 1, and FIG. 4B is an assembled cross-sectional view for FIG. 4A. The attaching structure of the ultrasonic horn 3 and horn chip 4 according to the present embodiment is configured to include a connecting member 7 as in the first embodiment, but its shape is different and the structures of a first screw part 33, second screw part 43, third screw part 71 and fourth screw part 72 are also different.

That is, the connecting member 7 of the present embodiment is a cylindrical member similar to the connecting member 7 of the first embodiment, but is a hollow cylindrical member and both the third screw part 71 and the fourth screw part 72 are provided as female screws. In other words, the connecting member 7 of the present embodiment has a nut-like shape. In addition, both the first screw part 33 formed with the chip mounting part 32 and the second screw part 43 formed with the base end of the horn chip 4 are provided as male screws. The first screw part 33 being screwed with the third screw part 71 and the second screw part 43 being screwed with the fourth screw part 72 in the present embodiment are the same as in the first embodiment.

The attachment surface 35 of the ultrasonic horn 3 is provided as a flat surface (XY-plane in FIG. 4A) that is substantially perpendicular to the screwing direction (Z-axis direction in FIG. 4A) of the first screw part 33. The attachment surface 42 of the horn chip 4 is also provided as a flat surface (XY-plane in FIG. 4A) that is substantially perpendicular to the screwing direction (Z-axis direction in FIG. 4A) of the second screw part 43. Therefore, when the horn chip 4 and the chip mounting part 32 are connected to each other via the connecting member 7, the attachment surface 35 of the chip mounting part 32 and the attachment surface 42 of the horn chip 4 are brought into close contact with each other.

In addition to the above, in the present embodiment, the central part of the tip of the chip mounting part 32 is formed with a first depression 37 and the central part of the base end of the horn chip 4 is formed with a second depression 46. The first depression 37 has a depth equal to the length of the third screw part 71 in the axis direction and also has a cross-section area equal to the cross-section area of a part of the connecting member 7 formed with the third screw part 71. The second depression 46 has a depth equal to the length of the fourth screw part 72 in the axis direction and also has a cross-section area equal to the cross-section area of a part of the connecting member 7 formed with the fourth screw part 72. That is, the first depression 37 and the second depression 46 are designed to have sizes such that, when the horn chip 4 is assembled with the chip mounting part 32 using the connecting member 7 as illustrated in FIG. 4B, the cross-section area of the cross section along line A-A of the figure, i.e. the cross-section area of the portion in which the connecting member 7 exists is equal to or approximately equal to the cross-section area of the cross section along line B-B of the figure, i.e. the cross-section area of the portion in which the connecting member 7 does not exist.

It is preferred to set the shapes of the chip mounting part 32 and horn chip 4 such that, when the ultrasonic vibration transmits from the vibrator 5 to the arm part 31 and further transmits to the tip surface 41 of the horn chip 4, the maximum amplitude is obtained at the tip surface 41 of the horn chip 4. In this case, when the cross-section area of the chip mounting part 32 and horn chip 4 is equal across the entire range, the position of a node of the vibration wave as illustrated by the dashed-two dotted line in FIG. 4B can be set easily and accurately. For this reason, the first depression 37 and the second depression 46 are provided in the present embodiment. It is to be noted, however, that the first depression 37 and the second depression 46 are not essential features of the present embodiment.

### «Fourth Embodiment»

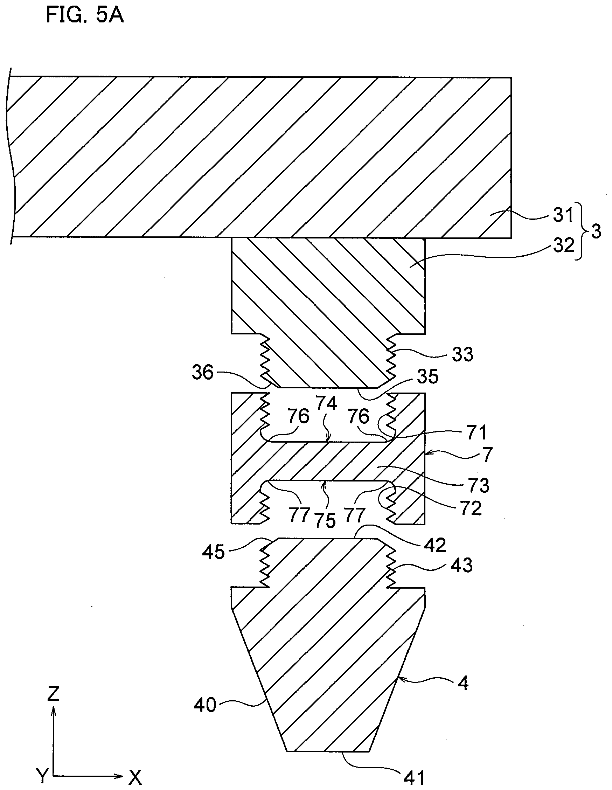

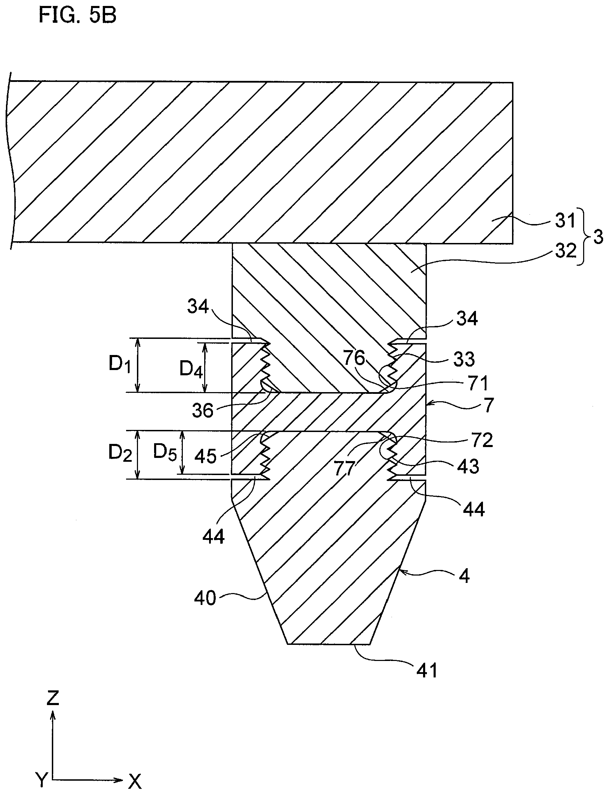

FIG. 5A is an exploded cross-sectional view illustrating an attaching structure of the ultrasonic horn and horn chip according to a fourth embodiment of the present invention and is a cross-sectional view corresponding to part II of FIG. 1, and FIG. 5B is an assembled cross-sectional view for FIG. 3A. The attaching structure of the ultrasonic horn 3 and horn chip 4 according to the present embodiment is configured to include a connecting member 7 as in the third embodiment, but its shape is different.

That is, the connecting member 7 of the present embodiment is not a cylindrical member as the connecting member 7 of the third embodiment and is configured to include a flat plate part 73 that has a pair of surfaces 74 and 75 between a third screw part 71 formed at one side and a fourth screw part 72 formed at the other side. Both the first screw part 33 and the second screw part 43 being provided as male screws and both the third screw part 71 and the fourth screw part 72 being provided as female screws in the present embodiment are the same as in the third embodiment.

In the present embodiment, one surface 74 (referred to as a "first main surface 74," hereinafter) of the plate part 73 of the connecting member 7 is provided as a flat surface (XY-plane in FIG. 5A) that is substantially perpendicular to the axis direction (Z-axis direction in FIG. 5A) of the third screw part 71. The other surface 75 (referred to as a "second main surface 75," hereinafter) of the plate part 73 of the connecting member 7 is also provided as a flat surface (XY-plane in FIG. 5A) that is substantially perpendicular to the axis direction (Z-axis direction in FIG. 5A) of the fourth screw part 72. Therefore, when the horn chip 4 and the chip mounting part 32 are connected to each other via the connecting member 7, the first main surface 74 of the plate part 73 and the attachment surface 35 of the ultrasonic horn 3 are brought into close contact with each other while the second main surface 75 of the plate part 73 and the attachment surface 42 of the horn chip 4 are also brought into close contact with each other. This allows the attachment surface 35 of the ultrasonic horn 3 and the attachment surface 42 of the horn chip 4 to be indirectly pressed against each other via the plate part 73.

In the connecting member 7 of the present embodiment, as illustrated in FIG. 5B, the length D1 of the first screw part 33 is set longer than the length D4 of the third screw part 71 (D1>D4) thereby to form a space 34 above the third screw part 71. Similarly, the length D2 of the second screw part 43 is set longer than the length D5 of the fourth screw part 72 (D2>D5) thereby to form a space 44 below the fourth screw part 72. According to such setting, when the connecting member 7 is connected to the horn chip 4 and the chip mounting part 32 of ultrasonic horn 3, the first main surface 74 of the plate part 73 is consequently brought into close contact with the attachment surface 35 of the chip mounting part 32 and the second main surface 75 of the plate part 73 is also brought into close contact with the attachment surface 42 of the horn chip 4.

The connecting member 7 of the present embodiment is in a shape having the plate part 73 at the center in the axis direction, rather than being a cylindrical member, and may possibly cause the stress concentration at the border between the third screw part 71 and the plate part 73 and at the border between the fourth screw part 72 and the plate part 73. Therefore, as illustrated in FIG. 5A and FIG. 5B, the entire circumference of the border between the plate part 73 and the third screw part 71 is formed with a first curved surface 76 while the entire circumference of the border between the plate part 73 and the fourth screw part 72 is formed with a second curved surface 77. In addition, the edge part of the first screw part 33 of the attachment surface 35 of the ultrasonic horn 3 is formed with a first circular inclined surface 36 of which the diameter decreases toward the tip while the edge part of the second screw part 43 of the attachment surface 42 of the horn chip 4 is formed with a second circular inclined surface 45 of which the diameter decreases toward the base end. Thus, the portion at which the stress is highly possible to concentrate is formed in a curved shape or tapered shape rather than a sharp shape, and the stress concentration can thereby be suppressed. Other features are basically the same as those of the third embodiment and the description is borrowed herein by denoting the same or similar parts using the same reference numerals also in FIGS. 5A and 5B.

### [Description of Reference Numerals]

- 1: Ultrasonic welding device
2 Anvil
3 Ultrasonic horn
31 Arm part
32 Chip mounting part
33 First screw part
34 Space
35 Attachment surface
36 First circular inclined surface
37 First depression
4 Horn chip
40 Taper part
41 Tip surface
42 Attachment surface
43 Second screw part
44 Space
45 Second circular inclined surface
46 Second depression
5 Vibrator
6 Pressure device
61 Support member
62 Rail
7 Connecting member
71 Third screw part
72 Fourth screw part
73 Plate part
74 First main surface (one surface)
75 Second main surface (the other surface)
76 First curved surface
77 Second curved surface
- W1, W2: Members to be welded

## Claims

1. An ultrasonic welding device for ultrasonic welding of members to be welded, comprising:
an ultrasonic horn having an attachment surface at a tip and transmitting ultrasonic vibration;
a horn chip having an attachment surface at a base end and transmitting the ultrasonic vibration to the members to be welded; and
a connecting member being provided between the ultrasonic horn and the horn chip for connecting the ultrasonic horn and the horn chip, wherein
the ultrasonic horn has a first screw part at the tip,
the horn chip has a second screw part at the base end,
the connecting member has a third screw part, which is screwed with the first screw part, in one side and has a fourth screw part, which is screwed with the second screw part, in an other side, and
the ultrasonic horn and the horn chip are connected by the connecting member so that the attachment surface of the ultrasonic horn and the attachment surface of the horn chip are pressed to each other.

2. The ultrasonic welding device according to claim 1, wherein both the first screw part and the second screw part are female screws, and both the third screw part and the fourth screw part are male screws.

3. The ultrasonic welding device according to claim 1, wherein both the first screw part and the second screw part are male screws, and both the third screw part and the fourth screw part are female screws.

4. The ultrasonic welding device according to any one of claims 1 to 3, wherein a length of the first screw part is longer than a length of the third screw part, and a length of the second screw part is longer than a length of the fourth screw part.

5. The ultrasonic welding device according to any one of claims 1 to 4, wherein
the connecting member is a cylindrical member consisting only of the first screw part and the second screw part, and
the ultrasonic horn and the horn chip are connected by the connecting member so that the attachment surface of the ultrasonic horn and the attachment surface of the horn chip are directly contacted and pressed to each other.

6. The ultrasonic welding device according to any one of claims 1 to 4, wherein
the connecting member includes a flat plate part having a pair of surfaces between the first screw part and the second screw part, and
the ultrasonic horn and the horn chip are connected by the connecting member so that one surface of the flat plate part and the attachment surface of the ultrasonic horn are contacted, an other surface of the flat plate part and the attachment surface of the horn chip are contacted, and the attachment surface of the ultrasonic horn and the attachment surface of the horn chip are indirectly pressed to each other via the flat plate part.

7. The ultrasonic welding device according to claim 6, wherein
the first screw part has a first circular inclined surface at an edge in the attachment surface of the ultrasonic horn,
the second screw part has a second circular inclined surface at an edge in the attachment surface of the horn chip,
the connecting member has a first curved surface at a border between the flat plate part and the third screw part and a second curved surface at a border between the flat plate part and the fourth screw part.

8. The ultrasonic welding device according to any one of claims I to 5, wherein a tip surface of the horn chip is circular.

9. The ultrasonic welding device according to any one of claims 1 to 8, wherein
the ultrasonic horn has, at the tip, a first depression having a depth equal to a length of the third screw part in a direction of an axis and a cross-section area equal to a cross-section area of a part in the connecting member in which the third screw part is formed,
the horn chip has, at the base end, a second depression having a depth equal to a length of the fourth screw part in a direction of an axis and a cross-section area equal to a cross-section area of a part in the connecting member in which the fourth screw part is formed.
